(19) Europäisches Patentamt
European Patent Office
Office européen des brevets

(11) EP 3 145 311 B1

(12) **EUROPEAN PATENT SPECIFICATION**

(45) Date of publication and mention
of the grant of the patent:
**13.03.2019 Bulletin 2019/11**

(21) Application number: **14851423.5**

(22) Date of filing: **10.12.2014**

(51) Int Cl.:
***A01N 43/16*** *(2006.01)*      ***A01N 25/04*** *(2006.01)*
***A01P 21/00*** *(2006.01)*

(86) International application number:
**PCT/LT2014/000014**

(87) International publication number:
**WO 2015/178748 (26.11.2015 Gazette 2015/47)**

(54) **BIOLOGICALLY ACTIVE SYNERGISTIC COMPOSITION**

BIOLOGISCH WIRKSAME SYNERGISTISCHE ZUSAMMENSETZUNG

COMPOSITION BIOLOGIQUEMENT ACTIVE AGISSANT PAR SYNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2014 LT 2014070**

(43) Date of publication of application:
**29.03.2017 Bulletin 2017/13**

(73) Proprietor: **UAB "Rokiskio Pragiedruliai"
42118 Rokiskis (LT)**

(72) Inventors:
• **KISELEVA, Natalia
  Moscow 115172 (RU)**
• **KOMAROVA, Olga
  Moscow region 141407 (RU)**
• **JUODEIKIENE, Grazina
  LT-51406 Kaunas (LT)**
• **SIUPINIENE, Justina
  LT-42161 Rokiskis (LT)**
• **GARIPOV, Jurij
  Moscow 119345 (RU)**
• **TASHCHI, Valerij
  Moscow 123592 (RU)**
• **MASLOVAS, Viaceslavas
  LT-42123 Rokiskis (LT)**
• **PELECKIS, Remigijus
  LT-82007 Seduva (LT)**
• **JUCIUNAS, Arturas
  LT-28185 Utena (LT)**
• **MISIOVIC, Vaidas
  LT-42282 Rokiskio r. (LT)**

(74) Representative: **Petniunaite, Jurga
AAA Law
P.O. Box 33
A. Gostauto street 40B
03163 Vilnius (LT)**

(56) References cited:
**RU-A- 2002 118 538**

• **Elena J Bakhtenko ET AL: "New Plant Growth
  Regulators for Fibre Flax", Journal of Pharmacy
  and Pharmacology, 31 March 2014 (2014-03-31),
  pages 194-200, XP55191318, Retrieved from the
  Internet:
  URL:http://www.davidpublishing.com/DownLoa
  d/?id=16359 [retrieved on 2015-05-22]**

**Description**

This invention relates to bioactive compositions, obtained from natural products of vegetable origin, for ecologic agriculture, more specifically, to means for pre-seeding treatment and post-germination treatment of vegetative plants, and can be used for agricultural crop growing as a fertilizer.

**Description of the Prior Art**

High biological activity of flavonoids, derived from the waste of plant raw materials, e. g., birch bark, root portion of Siberian larch-tree, grape-stones etc. is known. Such activity is manifested as a regulator of the transport of auxins - phytohormones, controlling growth and development of plants. Antibacterial and antifungal properties of bioflavonoids are also known, facilitating protection of plants from agents of various infection diseases, as well as the property of protecting the plants from stress effects of the environment, resulting in formation of free radicals, interrupting the cell vital processes [1].

Plant triterpene glycosides - powerful immunopotentiators - have a biological activity range, as broad as that of the flavonoid preparations. The mechanism of their action consists in causing expression of the genes responsible for immunity, and activates the enzymes and reactions necessary for the synthesis of chlorophyll and the light reaction of photosynthesis. An ability to form complexes with phenols, including flavonoids, and with higher alcohols is an important chemical property of triterpenoids. Hence, the study of the biological activity of combinations of the flavonoid and triterpenoid classes' representatives is an actual task, which may enable creation of new preparations, possessing a considerably higher activity towards versatile biological objects [2].

There is a known group of preparations in the form of emulsion, with the microcapsules containing one or several biologically active substances in the oil phase, isolated from fish oil, flax-seed oil, omega-3 and/or omega-6 and/or omega-9 fatty acids, conjugated linoleic acid, terpenoids, carotinoids, tocotrienols, flavonoids, hormones, antioxidants.[3] A method to obtain them through the interphase emulsion polymerization is also known, wherein viscosity modifiers and emulsifiers are preferably polysorbates, and the primary is preferably a soy lecithin-based emulsifier.

The advantages of the known invention include its application for production of food products for humans (particularly, for production of dietary supplements) and animals, including fish and microorganisms. Moreover, the preparations can be used for other purposes, and, specifically, for beauty aids, encapsulation of attractants, sterilizers, repellents, insecticides, herbicides, fungicides, bactericides, antivirals, as well for gene therapy and other similar purposes. Unfortunately, the invention materials disclose neither formulations, related to the preparations, including combinations of biologically active substances, nor the methods to investigate their activity and the methods of deriving thereof. Also, there are no data related to the preparations and the methods of producing them for the purposes of plant protection from environmental hazards, strengthening their root systems, trunks, stems, leaves, flowers and fruit, and the data on the effect of the preparations on the yield volume and quality.

There are known compositions of nanoemulsions with biologically active compounds, such as bioflavonoids: rutin, quercetin, dihydro quercetin and the triterpenoid betulin [4]. The known nanoemulsion contains 35-80% of a hydrophobic phase, 17-43 % of a surfactant, 3-7 % of a cosolvent, and 1-15 % of the aqueous phase. Mixtures of mono-, di- and triglycerides with mono- and di-ethers of saturated and unsaturated fatty acids are used as the hydrophobic phase, and the surfactants are from the group of sorbitans mixed with polyhydroxyalkanes or monoatomic alcohols.

The advantages of the known nanoemulsion composition include easy preparation, a possible use of polyphenol, triterpene compounds, vitamins and microelements as active elements, and obtaining formulations with prolonged release of hydrophilic active ingredients. Unfortunately, the presented materials do not contain any data on physicochemical properties and biological activity of the nanoemulsion composition for the combined use of the active ingredients.

There is a known method of grain crops growth regulation, including the preseeding treatment and treatment of vegetative plants with the preparation Larixin, a 5 % aqueous emulsion with the active substance content equal to 50 mg/ml, at that, the preseeding treatment is made with the preparation consumption rate of 100-250 ml per 1 t of seeds, and the vegetative plants are treated twice, during the phase of the beginning of the leaf-tube formation and during the phase of the flag leave appearance with the preparation consumption rate of 30-75 mg/ha [5]. The commercial preparation Larixin (Biochimzashchita SPE LLC, Ametis CJSC), owing to the main active substance taxifoline, can enhance the cultivated plants' resistance to diseases, pests and unfavourable climatic conditions, increases (induces) expression (activity) of protection genes in cultivated plants. Additionally, it has a stimulating effect on the immune system of plants, preventing and considerably reducing plant damage by fungus and bacterial diseases. A plant exposure to a biologically active substance results in the increase of activity of stress resistance genes, thereby the plant synthesizes special substances with the function of organizing links between environmental factors and the activity of isolated genes or their blocks. The usage of Larixin makes it possible to minimize the necessity to treat crops with fungicides, and to increase the yielding capacity of crops [6]. However, the known preparation still is not efficient enough in crop protection from fungal and bacterial diseases. Also, there are no data on the preparation formulation in terms of additive agents and on its usability for organic farming.

The share of the organic agriculture tends to grow in most of the states of the European Union. In recent years, the most noteworthy is the growth of demand for agricultural products, produced within the framework of the reform of the Common Agricultural Policy, aimed at development of the organic farming [7]. At that, the regulatory framework of the Community was developed, regulating the organic products sector, pursuing the aim of ensuring fair competition and proper performance of the organic products market, and supporting the consumer confidence in the products positioned as organic [8].

In this respect, preference is given to application of preventive measures in fighting pests, diseases and weeds. Usage of pesticides, which may have harmful consequences for environment or be present in the form of residues in the agricultural products, is seriously limited. Also, the list of biologically active and additive agents, which may be used as fertilizers and crop protecting agents, is considerably limited. Therefore, the task of developing new and biologically active preparations, in whose formulations active and additive substances suitable for application in organic farming can be used, is urgent.

The purpose of the invention is to create a new biopreparation on the basis of a combination of natural flavonoids and triterpenoids combined with additive agents, permissible for needs of organic farming, possessing a higher biologic activity towards different crops.

## Disclosure of the Invention

The purpose in view is achieved by the aqueous emulsion of the biologically active synergistic composition, comprising the bioflavonoid complex of taxifoline, dihydrokaempferol and naringenin, taken in the molar ratio of 1,0 : 0,102 - 0,104 : 0,014 - 0,016, a solvent and an emulsifier, with arabinogalactan and water-soluble triterpenoids in the weight ratio of 1-3 : 5-7 in the quantity of 0,3 - 0,7 Wt % of the aqueous phase added to the aqueous phase of the emulsion, and the bioflavonoid complex is divided between the oil phase and the aqueous phase in the weight ratio of 5-10 : 1.

It is reasonable to use a bioflavonoid complex solution in propylene glycol and/or ethanol as an oil phase In the biologically active synergistic composition, and polyaromatic ethoxylates and sodium dioctyl sulfosuccinate in the weight ratio of 8-10: 5-7, or 60 % lecithin solution in soy oil, taken in the quantity of 15 - 25 % of the oil phase volume, are used as an emulsifier.

Another subject of the invention is a method of preparing an aqueous emulsion of the biologically active synergistic composition, characterized in divided preparation of the oil and liquid phases, with the aqueous phase prepared by dissolving arabinogalactan and triterpenoids in distilled water in the quantity of not more than 5 grams per 1 litre during 4 hours at the temperature of 30 - 40°C, whereafter the biologically active components are added to the solution, taken in the synergistic ratio in the quantity not exceeding 0,5 grams per 1 litre of the solution, the oil phase is prepared by dissolving the biologically active components taxifoline, dihydrokaempferol and naringenin, taken in the molar ratio of 1,0 : 0,102 - 0,104 : 0,014 - 0,016 in propylene glycol heated in advance to the temperature of 33 - 39°C, or a propylene glycol mixture with ethanol, with subsequent addition of emulsifier Agrilan AEK 145 or SOPROPHOR BSU in the quantity of 15 - 25 % of the volume of the active components solution, with the dissolution lasting for 30 - 45 minutes, followed by adding stabilizer Lankropol KPH 70 or GEROPON DOS/PG in the quantity of 6 - 9 vol %, the prepared solution is held for 45 - 60 minutes at the temperature of 30 - 33°C while thoroughly mixed, with subsequent continuous dosing of the prepared aqueous phase to the oil phase for 60 - 90 minutes with the reaction mass circulation rate of 9 - 12 volumes per hour and the mixing power of 0,016 - 0,024 kW per 1 litre of the emulsion with aftercooling down to the temperature of 20 - 25°C for 60 - 90 minutes.

Yet another subject of the invention is a method of the use of the biologically active synergistic composition through its working solution preparation by solving the emulsion in water to the bioflavonoid complex concentration of 0,05 - 0,25 g/l with its subsequent application on the surface of seeds of agricultural crops or spraying onto the surface of vegetating cultivated plants at early stages of vegetation. The biological activity of the compositions with different ratios of active substances of the test compounds was tested at the Physical and Chemical Testing Laboratory, Artificial Climate Laboratory and in the field environment on the lands of Rokiskis District of the Lithuanian Republic.

In conditions of the physical and chemical testing laboratory, the antiradical activity and basic elements of the bioflavonoid complex were studied, such as taxifoline (DHQ) with the purity of 99,9 %, dihydrokaempferol (ARD) the purity of 98,9 %, and naringenin (NAR) 97,5 %, and various combinations thereof using the amperometric method with a TsvetYauza 1-A chromatograph with an amperometric gold-plate detector (Khimavtomatika NPO). The antiradical activity was measured with reference to the standard - Trolox in ORAC hydro value units ($\mu$mol TE/g). The active components were isolated in accordance with invention "Process for Preparing of Highly Pure Taxifoline" WO 2013/172693 by the method of preparative chromatography on a DAU 100-700 column with the dynamic axial compression, filled with the reverse-phase sorbent with increased retention of polar compounds with the particle size of 10-20 $\mu$m and the pore size of 120-200 A.

The quantitative analysis of the bioflavonoid complex and its active components was conducted using the HPLC method on a Shimadzu Nexera 2020 chromatograph mass-spectrometer under the following conditions: a column (HPLC Column) - 250 mm x 4,0 mm, reverse-phase sorbent - YMC-Pack ODS-AQ $C_{18}$, I.D. S - 5 $\mu$m, analytic wavelength - 290 nm, mobile phase - acetonitrile in 0,1 % aqueous solution of the acetic acid (25:75), injection volume - 10 $\mu$L, the mobile phase flow velocity - 80 $\mu$L/min, run time - 25 minutes. The findings were processed using the LabSolutions LCMS software.

Based on the data on efficacy of composite preparations, comprising more than one active substance, the nature of the biological interaction of the active components forming the composition is calculated to assess the level of their synergism, antagonism or additivity, i.e., the simple addition of the effects of each of the components of the mixed preparative forms.

It is common practice in herbology to evaluate the nature of the biological interaction using the mathematical relations, proposed by Colby and Limpel. According to Colby and Limpel calculation formulas for mixed preparations, the data selected for comparison are the efficacy of individual preparations, applied separately in a specific dose, and the efficacy of the mixed composition, wherein the components are taken in the same doses or application rates very close to them.

The synergistic effect of the preparations under test is calculated by Colby's formula (1) (see Colby S.R. Calculating Synergistic and Antagonistic responses of herbicide combination Weeds. 1967. V. 15. N1. PP. 20-22):

$$E = E_э - E_o \ (1)$$

where E - the synergistic effect of the composition,

$E_э$ - the value of the result in the test,

$E_o$ - the expected value of the result in the test.

The example of calculation for a three-component composition (A+B+V):

where **E** - the "expected" effect of the composite preparation (A+B+V);

**x** - the value of the result of the individual use of A component in the dose close to its content in the composition;

**y** - the value of the result of B component use in the manner similar to the previous one;

**z** - the value of the result of C component use in the same manner.

When the actual effect of the mix of 2 or more herbicides is considerably higher that the "expected" $E_o$, calculated according to the formulas, there may exist the synergism of the components of the composition in the nature of the biological interaction; if the actual effect obtained in the test is notably lower than the "expected" $E_o$, the mixture components antagonism is observed; if the "expected" $E_o$ coincides with the actual experimental value, one may judge about additivity of components of the mixture or composition.

The studies conducted have shown that all three tested active substances, taxifoline, dihydrokaempferol and naringenin, both in their pure form and in compositions, exhibit high biological (antioxidant) activity.

The effect of different ratios of taxifoline, dihydrokaempferol and naringenin on the level of biological (antiradical) activity is shown in Table 1.

Table 1

| Molar ratio DHQ/ARD/NAR | Dose of the active component of the composition (g / l) | | | Antioxidant activity by ORAC (μmol TE/g). | | |
|---|---|---|---|---|---|---|
| | DHQ | ARD | NAR | Еэ | Eo | E |
| 1:0:0 | 50 | 0 | 0 | 25,40 | | |
| 0:1:0 | 0 | 5 | 0 | 9,70 | | |
| 0:0:1 | 0 | 0 | 0,7 | 7,90 | | |
| 0,15:0,01:0.002 | 45,638 | 2,883 | 0,545 | 17,30 | 11,88 | 5,423 |
| 0,16:0,01:0,002 | 48,68 | 2,883 | 0,545 | 18,80 | 12,65 | 6,1527 |
| 0,17:0,01:0,002 | 51,723 | 2,883 | 0,545 | 20,50 | 13,42 | 7,0824 |
| 0,16:0,015:0,002 | 51,723 | 4,324 | 0,572 | 23,70 | 13,54 | 10,159 |
| 0,16:0,016:0,002 | 51,723 | 4,612 | 0,545 | 24,20 | 13,56 | 10,637 |
| 0,16:0,017:0,002 | 51,723 | 4,900 | 0,545 | 28,80 | 13,59 | 15,212 |
| 0,165:0,017:0,0025 | 50,201 | 4,900 | 0,681 | 29,70 | 13,21 | 16,488 |
| 0,16:0,015:0,001 | 51,723 | 4,612 | 0,272 | 19,90 | 13,54 | 6,3553 |
| 0,16:0,016:0,002 | 51,723 | 4,612 | 0,545 | 24,20 | 13,56 | 10,637 |
| 0,16:0,017:0,003 | 51,723 | 4,612 | 0,817 | 26,50 | 13,58 | 12,918 |

As shown by the data of Table 1, the following composition should be deemed the optimum ratio of components of the compositions under study, displaying the maximum antioxidant activity: taxifoline - 0,165 mol/l, dihydrokaempferol - 0,017 mol/l and naringenin - 0,0025 mol/l, which corresponds to the molar ration of the tested components of 1,0 : 0,102 - 0,104 : 0,014 - 0,016. In the field of the optimum molar ratios, the tested bioflavonoid composition exhibits the maximum biological activity with the synergistic effect of 12,9 - 16,5 %.

The biologically active synergistic composition in the form of the aqueous microemulsion contains the components in the following molar ratios:

| | |
|---|---|
| Taxifoline CAS 207-543-4 | 1,0 |
| Dihydrokaempferol CAS 480-20-6 | 0,102 - 0,104 |
| Naringenin CAS 480-41-1 | 0,014 - 0,016 |
| Surfactants Wt %. | 7 - 12 |
| Solvent, Wt %. | 20 - 40 |
| Water | other to complete to 100 |

Characteristics of surfactants and solvents, which can be used in the new biologically active synergistic composition, conventionally named Rokiprag, are presented below.

| Agrilan AEK 145 | Non-ionic emulsifier based on polyaromatic ethoxylate |
|---|---|
| SOPROPHOR BSU | Poly(oxy-1,2-ethanediyl),.alpha.-[tris(1-phenylethyl) phenyl]-.omega.- hydroxy- CAS 99734-09-5 |

(continued)

| Lankropol KPH 70 | Sodium dioctyl sulphosuccinate CAS 577-11-7 Propylene glycol CAS 57-55-6 |
|---|---|
| GEROPON DOS/PG | Sodium dioctyl sulphosuccinate in glycol Water Solution CAS 577-11-7; CAS 57- 5-6 ; CAS 7732-18-5 |
| Lecithin | Soya Lecithin Liquid CAS 8002-43-5 |
| Arabino galactan | Polyarabinogalactan from Larch Wood CAS 9036-66-2 |
| Solvent | Ethyl alcohol CAS 64-17-5 |
| Solvent | Propylene glycol CAS 57-55-6 |

The major problem in the emulsion technology is ensuring physical stability. Emulsions - disperse systems with the developed phase boundary and having an excess of the free surface energy are characterized by the following types of instability: the thermodynamic instability - a capability to retain in time the fixed drops dimensions of the disperse phase, and the sedimentation instability - a capability to retain in time the fixed distribution of the disperse phase drops throughout the system volume.

The method of the sedimentation stability determination is based on dividing the emulsion into the oil and aqueous phases by centrifuging. Two test tubes were half-filled with the tested emulsion and weighed, the result is recorded to the second decimal point. The difference in the mass of the tubes with the emulsion shall not exceed 0,2 g. The tubes were placed in the water bath and held for 20 min at the temperature of 22-25°C. The tubes were taken out, wiped dry on the outside and put into the centrifuge sockets. The centrifuging lasted for 5 minutes at the rotation speed of 1000 rounds per minute, then the tubes were taken out and the emulsion stability was determined. If the emulsion breakdown was observed in one of the tubes, the test was repeated with new emulsion samples.

In the absence of clear emulsion breakdown, the tube content was cautiously poured on the sheet of the white hard paper and the emulsion breakdown presence or absence was noted. The emulsion was considered stable, if, after centrifuging in the tubes, the separation of not more than one drop of the aqueous phase or an oil phase layer of not more than 5 mm was noted.

The thermostability determination method is based on the emulsion breakdown into the oil and aqueous phases at elevated temperatures. Three tubes, diameter 14 mm, height 120 mm, or 25 $cm^3$ capacity cylinders are half-filled with the tested emulsion, taking care not to leave air bubbles in the emulsion, plug by stoppers and placed in the thermostat at the temperature of 40-42°C. When the emulsion thermostability was determined, after 1 hour of thermostatting, the content of the tubes or cylinders was carefully stirred with a glass rod to remove the air. The emulsion is kept in the thermostat for 24 h, and the stability was then determined. The emulsion was considered stable, if, after thermostatting in the test tubes, the aqueous phase separation was not observed, or the observed separation of the oil phase layer was not more than 5 mm.

The thermodynamic stability was determined by the emulsion stability determination method in accordance with the patent of the RU No. 2464970, including sampling and sample preparation, like for the sedimentation stability determination. Then, the tested emulsion was observed through the microscope, and micellae quantity was counted on a 1 $cm^2$ site at 2000-fold magnification with subsequent comparison to micellae quantity $n_0$ in the sample, not exposed to preparation, considering the emulsion conditionally stable at $n/n_{o*}100 \geq 50$. After that, the samples with the conditionally stable emulsion were exposed to accelerated ageing within a month in the thermostat at the temperature of 40-42°C and relative humidity of $65\pm2\%$, periodically conducting microscopic observation of the samples on a 1 $cm^2$ site at 2000-fold magnification. The statistical processing of the experimental data was performed according to the equation $n'= a \exp(a_{1*}1/\tilde{i})$, where n' - number of micellae, $pcs/cm^2$; $\tilde{i}$ - accelerated ageing time, days; $\mathring{a}$, $\mathring{a}_1$, - design coefficients of the exponential equation, obtained as a result of the experimental data processing, with $\tilde{i} \rightarrow$ the preset storage time, with calculation of the possible emulsion condition at the value of $n/n_{o*}100 \geq 50$, the emulsion is considered stable and suitable for a long storage.

Initially, two samples of the biologically active synergistic composition Agrostimul were tested for sedimentation and thermodynamic stability, containing 50 g/l of taxifoline, 5 g/l of dihydrokaempferol and 0,5 g/l of naringenin. The samples were obtained on different surfactants: sample No.1 contained 90 ml/l of Agrilan AEK145 emulsifier and 60 ml/l of Lankropol KPH 70 stabilizer; sample No. 2 contained 120 ml/l of Soya Lecithin Liquid. In both cases the Propylene glycol solvent was used in the quantity sufficient for full dissolution of the bioflavonoid complex. Both samples showed the same sedimentation stability - no emulsion breakdown was observed. Both samples demonstrated high thermodynamic stability - the values of criterion $n/n_{o*}100$ for sample No. 1 the values of the criterion in 24 hours $n/n_{o*}100$ were 97 %, and for sample No. 2 - 98 %, and in 24 hours - 94 % and 95,5 %, respectively.

It was quite a surprise for the authors to discover that, due to the mechanical action related to transportation, both samples were sometimes exposed to slight breakdown of the oil and aqueous phases, with sample No. 1 breaking down somewhat more intensively, than sample No. 2. At that, it turned out that, after both samples shaking for 10 - 15 seconds, the initial condition of both samples was restored. The authors correlated the observed phenomenon with limitations of the method for the emulsion preparation, specifically, with the underviscosity of the emulsion aqueous phase. Table 2 shows the samples of emulsions of the biologically active synergistic composition Rokiprag with modified distribution of active components between the oil and aqueous phases, and the aqueous phase modification by adding arabinogalactan (ARG) and soluble triterpenoids (TTR), produced at the stage of separation of taxifoline with a purity of 99,9 %.

Table 2

| Sample | Oil phase, g/l | | | Aqueous phase, g/l | | | | | Stability | |
|---|---|---|---|---|---|---|---|---|---|---|
| | DHQ | ARD | NAR | DHQ | ARD | NAR | ARG | TTR | % | $n/cm^2$ |
| No.1 * | 47,5 | 4,75 | 0,581 | 2,5 | 0,25 | 0,1 | 5 | 0 | 96,7 | 33 |
| No.2** | 47,5 | 4,75 | 0,581 | 2,5 | 0,25 | 0,1 | 5 | 0 | 97,4 | 37 |
| No.3* | 49,3 | 4,85 | 0,611 | 0,7 | 0,15 | 0,07 | 0 | 5 | 95,2 | 29 |
| No.4** | 49,3 | 4,85 | 0,611 | 0,7 | 0,15 | 0,07 | 0 | 5 | 96,5 | 32 |
| No.5* | 46,5 | 4,67 | 0,581 | 3,5 | 0,33 | 0,1 | 5 | 5 | 98,3 | 38 |
| No.6** | 46,5 | 4,67 | 0,581 | 3,5 | 0,33 | 0,1 | 5 | 5 | 99,5 | 44 |
| *) Surfactants Agrilan AEK 145 - 90 ml/l and Lankropol KPH 70 - 60 ml/l were uses as an oil phase. Solvent - Propylene glycol. **) Soya Lecithin Liquid - 120 ml/l was used as the oil phase. Solvent - Propylene glycol. | | | | | | | | | | |

As it follows from Table 2, the highest sedimentation and thermodynamic stability was demonstrated by samples No. 5 - 98,5% and No. 6 - 99,5%. Also, the best result was shown by samples No. 5 and No. 6 with the microscopic examination of the average number of drops of working solutions of both samples, when diluting the source emulsions 100-fold at 2000-fold magnification - 38 drops per $cm^2$ and 44 drops per $cm^2$, respectively. Measurement of the average size of the drops of samples No.1, No.3 and No.5 yielded quite an unexpected result. If the average size of the drops of samples No.2, No.4, and No.6 was 1,2, 1,6 and 2,0 $\mu$m, the average size of the drops of samples No.1, No.3 and No.5 was 0,22, 0,13 and 0,09 $\mu$m. Moreover, samples No.1, No.3 and No.5 are dark-brown transparent liquids, due to which they can be referred to the category of nanoemulsions.

Based on the findings of the tests conducted, a conclusion can be made that it is reasonable to modify the aqueous phase of biologically active synergistic composition Rokiprag with arabinogalactan and/or water-soluble triterpenoids, and to re-allocate up to 5 % of active components from the oil phase to the aqueous phase.

In conditions of the greenhouse trial, Rokiprag phytotoxicity was initially assessed at the Artificial-Climate Laboratory (ACL) at the following modes of the chambers' operation: illumination of 20 ths. lx during 14 hours, no light for 10 hours per day, daytime air temperature 18°C, at night 12°C, relative air humidity 70 %, soil moisture in vegetative pots 60 % of the maximum water capacity, maintained by everyday watering according to the weight with desalinated water. Garden cress (Lespidium sativilum L.) of variety Radiata, N. Sgaravatti & c.S.P.A (Italy) - annual, herbaceous, patient of cold, early-season variety plant was used as a test plant. The period from seadlings to industrial ripening is 20-25 days. The plant is of the semi-elevated type, folious, 15-20 cm high. The leaves are medium-sized, narrow, lyrate, green, incised. The lamina edges are dentate, with the opposite leaf aestivation. The average mass of one plant is 30 g. Garden cress is hypersensitive to environmental contamination and is noted for quick seed germination, almost 100% germinating capacity, markedly decreasing with an adverse effect. Besides, the sprouts and roots of the plant are exposed to noticeable morphological changes: growth retardation and shoot distortion, reduction of the root length and mass, and of the seeds number and mass.

The test was run when sprouting the seeds of the test plant garden cress under the conditions of the said modes using 600 g disposable vegetative pots in the mix of the sod-podzolic soil, sand and organics in the ratio of 1:1:1. 20 treated seeds of the test plants were left in each pot. The test was run in three replications, with formation of four test groups on working solutions of samples No. 5 and No. 6 from Table 2, and one control group on drinking water. The number of the treated seeds in each group was 20 pcs. All seeds were taken from one batch. The working solutions for the seeds soaking were prepared by diluting the original emulsions 10-, 100- and 200-fold. The test plant seeds were soaked during 2 hours, after which the treated and control seeds were transferred to the vegetative pots.

The biological activity was assessed every 8 hours, starting from Day 2 after treatment, as compared to the non-treated control group. On Days 5 and 10 the results were estimated by the difference in the wet weight of the test plants. The results of the initial estimation of Rokiprag phytotoxicity as related to garden cress of the Radiata variety are shown in Table 3.

Table 3.

| | 5 days | | 10 days | | 15 days | |
|---|---|---|---|---|---|---|
| | Mass, g | % to control | Mass, g | % to control | Mass, g | % to control |
| Sample No. 5, solution 0,5 % | 17,7 | 118,0 | 26,4 | 105,6 | 32 | 106,7 |
| Sample No. 5, solution 1 % | 11,5 | 76,7 | 19,8 | 79,2 | 29,8 | 99,3 |
| Sample No. 5, solution 10 % | 7,9 | 52,7 | 14,4 | 57,6 | 24,4 | 81,3 |
| Sample No. 6, solution 0,5 % | 19,3 | 128,7 | 27,3 | 109,2 | 34,7 | 115,7 |
| Sample No. 6, solution 1 % | 13,70 | 91,3 | 23,7 | 94,8 | 32,2 | 107,3 |
| Sample No. 6, solution 10 % | 10,9 | 72,7 | 19,6 | 78,4 | 28,4 | 94,7 |
| Control | 15 | | 25 | | 30 | |

As it follows from Table 3, Rokiprag is phytotoxic for garden cress of the Radiata variety at the concentration of the working solutions of samples No. 5 and No. 6 - 10 %. The working solution of sample No. 5 at the concentration of 1 % did not exhibit phytotoxicity, but it did not exhibit any plant growth stimulation either - at the control group level. The working solutions of sample No. 5 at concentrations of 0,5 and 1 % stimulated the plant growth by 15,7 % and 7,3 %, respectively.

The observation also showed correlative results in all three replications. The ontogenesis in the control group followed the standard scheme. In the first group (10 % working solutions of samples No. 5 and No. 6), the seed lobe suppression was noted, as well as reduction of the germinating capacity by 5 % and the germ phase prolongation, but later the plants developed under the standard scheme, but with a substantial delay. In the second group (10 % working solutions of samples No. 5 and No. 6), the growth responses on Days 1 and 2 slowed down, but it restored on Day 3. However, the plant suppression within the first 10 days was clearly seen. In the third group (0,5 % working solutions of samples No. 5 and No. 6), enhancement of the growth responses was noted throughout the entire observation period.

Therefore, with the pregerminating treatment of the garden cress seeds, phytotoxicity of the biologically active synergistic composition Rokiprag was noted at the working solutions concentration over 1 %, and with a higher dilution rate, e. g., up to 0,5 % and higher, the plant growth stimulation is noted. The results of the similar tests to determine phytotoxicity and effectiveness of the working solutions of biologically active synergistic composition Rokiprag as compared to Larixin (reference) at pregerminating treatment of the seeds of cultivated plants are shown in Table 4.

Table 4

| | The effective concentration of the working solution, % | | Limit phytotoxicity of the working solution% | |
|---|---|---|---|---|
| | Rokiprag | Larixin | Rokiprag | Larixin |
| Wheat | 0,4 | 0,5 | 0,6 | 0,7 |
| Rye | 0,4 | 0,5 | 0,7 | 0,7 |
| Barley | 0,4 | 0,5 | 0,6 | 0,7 |
| Buckwheat | 0,5 | 0,7 | 0,5 | 0,9 |
| Oats | 0,5 | 0,8 | 0,9 | 1 |
| Soy | 0,75 | 1,0 | 1,15 | 1,35 |
| Rape | 1,1 | 1,2 | 1,3 | 1,25 |
| Sunflower | 1,75 | 2,5 | 2,4 | 3 |
| Cucumber | 0,05 | 0,1 | 0,12 | 0,15 |

(continued)

|  | The effective concentration of the working solution, % | | Limit phytotoxicity of the working solution% | |
| --- | --- | --- | --- | --- |
|  | Rokiprag | Larixin | Rokiprag | Larixin |
| Tomato | 0,05 | 0,1 | 0,13 | 0,15 |
| Sugar beet | 1,5 | 2,5 | 2,7 | 3 |

As it follows from the data presented in Table 4, the mean level of Rokiprag phytotoxicity is by 19,4 % higher than that of Larixin. At that, the biological activity of Rokiprag surpasses in the criterion of the effective concentration of the working solution of the mean biological activity of Larixin by 29,8 %.

Biologically active synergistic composition Rokiprag was tested in the field plot trials.

The weather conditions of the vegetation season of 2012 in some cases differed from the average many-year indices (normal) and are presented in Table 5.

Table 5

| Month, decade | | Air temperature, °C | | | Precipitation, mm | | |
| --- | --- | --- | --- | --- | --- | --- | --- |
| | | Average many-year | 2012 | Deviation from the average many-year | Average many-year | 2012 | Deviation from the average many-year |
| May | 1 | 10,7 | 12,6 | +1,9 | 14,1 | 21,5 | +7,4 |
| | 2 | 12,0 | 16,5 | +4,5 | 19,1 | 5,9 | -13,2 |
| | 3 | 13,5 | 15,2 | +1,7 | 21,4 | 9,2 | -12,2 |
| mean | | _12,1_ | _14,8_ | _+2,7_ | _Σ54,6_ | _Σ 36.6_ | _-18,0_ |
| June | 1 | 15,2 | 13,7 | -1,5 | 24,8 | 41,1 | +16,3 |
| | 2 | 16,1 | 18,5 | +2,4 | 23,4 | 32,8 | +9,4 |
| | 3 | 16,8 | 17,0 | +0,2 | 24,3 | 25,4 | +1,1 |
| mean | | _16,0_ | _16,4_ | _+0,4_ | _Σ72,5_ | _Σ 99,3_ | _+26,8_ |
| July | 1 | 17,2 | 21,8 | +4,6 | 28,9 | 0,7 | -28,2 |
| | 2 | 17,8 | 18,3 | +0,5 | 28,0 | 22,9 | -5,1 |
| | 3 | 17,6 | 20,4 | +2,8 | 26,2 | 16,0 | -10,2 |
| mean | | _17,5_ | _20,2_ | _+2,7_ | _Σ83,1_ | _Σ 39,6_ | _-43,5_ |
| August | 1 | 17,5 | 21,3 | +3,8 | 22,8 | 1,7 | -20,1 |
| | 2 | 15,6 | 17,2 | +1,6 | 22,5 | 40,6 | +18,1 |
| | 3 | 14,6 | 13,9 | -0,7 | 26,0 | 32,3 | +6,3 |
| mean | | _15,9_ | _17,3_ | _+1,4_ | _Σ71,3_ | _Σ 76,6_ | _+5,3_ |

As it is seen from Table 5, the vegetation period of 2012 did not differ in the air temperature from the average many-year indices, but, at the average, May - August were warmer than usual by 0,4 - 2,7°C. The precipitation in the vegetation season (from May to August) was extremely irregular as compared to the average many-year levels (the rain deficit varied within 18,0 - 43,5 mm by months). Thus, in May (soy sowing), the precipitation was 18 mm below normal, while in July (the period of active growth of cultivated and weed plants) the amount of precipitation exceeded the average many-year index by 26 mm. July was relatively dry, the precipitation deficit was 43 mm, and August was rainy enough and did not differ from the average many-year indices. In general, the vegetation season of 2012 was quite favourable for growth and development of both cultivated and weed plants by temperature conditions and atmospheric precipitation level, and in practical terms did not materially differ from the average statistical indices.

Crop: soy, variety Bara. Seed rate: 100 kg/ha. Seeding date: 22.05.2012. Seedling emergence time: 02.06.2012. Trial plot soil: sod-podzol, with humus content of 2,5 %, $pH_{aq.}$ 5,8; CEC 11 mg-eqv /100 g of soil. On the day of pregerminating treatment: 28.05.2012, air temperature: 15,6°C. Relative air humidity: 64%. Wind speed: less than 1,8 m/s. After-treatment precipitation time and rate: after 2 hours, 1,5 mm.

On the day of the first vegetative treatment: 28.06.2012 (initial blossom phase): air temperature: 18,2°C. Relative air humidity: 50 %. Wind speed: less than 1,8 m/s. After-treatment precipitation time and rate: none.

On the day of the second treatment: 15.07.2012: air temperature: 15,3°C. Relative air humidity: 75 %. Wind speed: less than 1,8 m/s. After-treatment precipitation time and rate: after 2 hours, 0,5 mm.

Meteorological extremes (glazed rain, ground frost, rain showers etc.): not observed.

Different formulations of biologically active synergistic composition Rokiprag as compared to Larixin (reference) were applied on vegetative plants in the form of an aqueous suspension using an experimental spraying device OD-2 designed by the All-Russian Research Institute for Phytopathology (Bulletin of the Russian Agricultural Academy, 1993, No. 3). The aqueous suspension consumption rate was 300 l/ha. The trial plot area was 25-50 $m^2$, four replications, the plot arrangement was sequential, with randomization elements.

The doses of the preparations, used in the field plot trials are shown in Table 6.

Table 6

| Preparations | Dose use of Preparations mg/ha | |
|---|---|---|
| | The first treatment | The second treatment |
| Rokiprag No. 5 | 40 | 30 |
| Rokiprag No. 6 | 30 | 25 |
| Larixin | 40 | 30 |
| Control (one preparation) | 0 | 0 |

Dates of the test objects accounting: July 12 and August 02. Methods ot accounting: quantitative and quantitative - weight methods on accounting sites of 0,25 $m^2$, 4 sites per each plot. Method of harvesting and yield accounting: harvesting in sheaves from 1 $m^2$, two replications on each plot. The statistical data processing was performed using the analysis of variance.

The period of the effective action of the preparations: from the time of spraying throughout the entire period of the crop vegetation.

The economic effectiveness of tank mixtures of the preparations, corresponding to the new biologically active synergistic composition Rokiprag as compared to the reference at pregerminating application on the soy plantings is shown in Table 7.

Table 7

| Trial variant | Preparation dose in the form of tank mixtures, ml/t | Grain yield, c/ha | | | | | | Protected yield, c/ha |
|---|---|---|---|---|---|---|---|---|
| | | by replications | | | | Average yield, c/ha | |
| | | I | II | III | IV | | |
| Rokiprag No. 5 | 100 | 18,4 | 20,1 | 22,0 | 19,8 | 20,0 | 11,9 |
| Rokiprag No. 6 | 100 | 23,5 | 23,9 | 22,0 | 22,7 | 23,7 | 15,6 |
| Larixin | 100 | 15,5 | 16,3 | 15,7 | 14,9 | 15,6 | 7,5 |
| Control (one preparation) | – | 6,0 | 8,8 | 10,7 | 6,8 | 8,1 | |

The economic effectiveness of tank mixtures of the preparations, corresponding to the new biologically active synergistic composition Rokiprag as compared to the reference at spraying in the initial blossom phase on the soy plantings, is shown in Table 8.

Table 8

| Trial variant | Preparation dose in the form of tank mixtures, ml/ha | Grain yield, c/ha | | | | | | Protected yield, c/ha |
|---|---|---|---|---|---|---|---|---|
| | | by replications | | | | Average yield, c/ha | |
| | | I | II | III | IV | | |
| Rokiprag No.5 | 40 | 20,6 | 21,6 | 22,2 | 21,4 | 21,4 | 19,1 |
| Rokiprag No.6 | 40 | 23,5 | 23,9 | 22,0 | 22,7 | 23,7 | 20,7 |
| Larixin (Standard) | 40 | 21,0 | 19,2 | 17,5 | 19,0 | 19,2 | 16,9 |
| Control (one preparation) | – | 6,0 | 8,8 | 10,7 | 6,8 | 8,1 | |

According to the data presented in Tables 7-8, the application of biologically active synergistic composition Rokiprag, sample No.6, for pregerminating application and the treatment by spraying in the initial blossom phase resulted in significant stimulation of the plant growth and considerable rise in the yielding capacity of soy of the variety Bara.

Also, it was established during the tests, that Rokiprag samples No. 5 and No. 6 demonstrated higher biological activity not only as compared to the control, but they surpassed the biological activity of the reference - Larixin - by 22,4 %. The economic effectiveness of the application of both samples of synergistic composition Rokiprag was higher with the foliage treatment, than with the pregerminating application of the preparations: 19,1 - 20,7 c/ha of the protected soy yield, which significantly surpassed the yield on the plot with the reference preparation Larixin - 16,9 c/ha.

Quite an unexpected result of the field plot trial was that biologically active synergistic composition Rokiprag, additionally containing arabinogalactan and triterpenoids in the doses of 0,05 - 5,0 g/hl, with various application doses, and exhibits a stable tendency of enhancing the economic effectiveness when stimulating soy plants in all vegetation phases tested. Therefore, it is reasonable to formulate the new biologically active synergistic composition as the aqueous oil-in-water emulsion at the molar ratio of the active substances taxifoline, dihydrokaempferol and naringenin 1,0 : 0,102 - 0,104 : 0,014 - 0,016 with arabinogalactan and triterpenoids content in the composition of 0,05-0,5 Wt %, and re-allocation of up to 5 % of the active components from the oil phase to the aqueous phase.

It is reasonable to formulate the biologically active synergistic composition as follows. The aqueous phase is prepared by diluting arabinogalactan and triterpenoids in the quantity of not more than 5 grams per 1 litre of distilled water for 4 hours at the temperature of 30 - 40°C, after which the biologically active components are added to the solution, taken in the synergistic ratio in the quantity not exceeding 0,5 grams per 1 litre of the solution. It is reasonable to dissolve the biologically active components while stirring with the use of ultrasound. The oil phase is prepared by dissolving the biologically active components taxifoline, dihydrokaempferol and naringenin, taken in the molar ratio of 1,0 : 0,102 - 0,104 : 0,014 - 0,016 in a solvent, e. g., propylene glycol or a propylene glycol mixture with ethanol, pre-heated up to the temperature of 33 - 39°C, with subsequent addition of emulsifier Agrilan AEK 145 or SOPROPHOR BSU in the quantity of 15 - 25 % of the volume of the active components solution, with the dissolution lasting for 30 - 45 minutes, followed by adding stabilizer Lankropol KPH 70 or GEROPON DOS/PG in the quantity of 6 - 9 vol % and the solution is held for 45 - 60 minutes at the temperature of 30 - 33°C while thoroughly mixed. It is reasonable to use 60 % lecithin solution in soy oil (Soya Lecithin Liquid) as an emulsifier, taken in the quantity of 15 - 25 % of the oil phase volume, pre-heated up to the temperature of 33 - 39°C. The biologically active synergistic composition emulsion is prepared by the continuous dosing of the prepared aqueous phase to the oil phase for 60 - 90 minutes with the reaction mass circulation rate of 9 - 12 volumes per hour and the mixing power of 0,016 - 0,024 kW per 1 litre of the emulsion with aftercooling down to the temperature of 20 - 25°C for 60 - 90 minutes.

If the oil phase is prepared using the combination of surfactants Agrilan AEK 145 and Lankropol KPH 70, or SOPROPHOR BSU and GEROPON DOS/PG, 75 % of the emulsion oil phase have the linear dimension (diameter) 0,09 - 0,22 $\mu$m, which enables characterizing the biologically active synergistic composition as a nanoemulsion.

## Preferred Embodiments of the Invention

### Example 1

10,5 litres of propylene glycol CAS 57-55-6 are loaded into a heated reactor with a mixer with a capacity of 0,5 kW, the working volume of 0,3 m$^3$, and are heated up to 37°C, after which 1490 g taxifoline CAS 207-543-4, 130 g of dihydrokaempferol CAS 480-20-6 and 63 g of naringenin CAS 480-41-1 are dosed and mixed at the temperature of 39°C until fully dissolved. Then, 2700 ml of emulsifier SOPROPHOR BSU CAS 99734-09-5 are dosed to the reactor and mixed for 40 minutes, followed by adding 1800 ml of stabilizer GEROPON DOS/PG CAS 577-11-7 and mixing for 35 minutes at the temperature of 33°C. 18 l of distilled water are poured into a similar reactor and heated to the temperature of 39°C, 35 g of arabinogalactan CAS 9036-66-2 and 30 g of water-soluble triterpenoids are added and mixed for 4 hours, after which 100 g of taxifoline CAS 207-543-4, 15 g of dihydrokaempferol CAS 480-20-6 and 7 g of naringenin CAS 480-41-1 are added. Mixing with ultrasound with the intensity of 150 W is carried out for 2 hours. The aqueous phase is dosed into the first reactor with the prepared oil phase at the rate of 0,3 l/min for 60 minutes at the mixing power of 0,5 kW and the circulation rate of 9 reactor volume units per hour at the temperature of 35°C. The prepared emulsion in the quantity of 30 litres is cooled while thoroughly stirring for 60 minutes at the temperature of 20°C, then taken out of the reactor and dispensed into 1 litre bottles. The finished emulsion of biologically active synergistic composition Rokiprag is a dark-brown transparent liquid with the density of 1,085 g/cm$^3$, the pH value of 1 % aqueous emulsion of the preparation is 5,9. The active components' content: taxifoline - 50,2 g/l, dihydrokaempferol - 4,9 g/l, naringenin - 0,7 g/l, which correlates with the synergistic molar ratio of the components 1,0 : 0,102 : 0,014. The particle diameter (50% of the composition) is not more than 2,2- 3,6 $\mu$m. The preparation is stable in the original packing within 2 years from the date of manufacture in the temperature range of plus 30°C to minus 20°C. At the temperature below minus 20°C, it freezes throughout the entire volume. After thawing, formation of an about 5 mm high oil phase layer is observed at the bottom, disappearing when mixed.

The aqueous emulsion of biologically active synergistic composition Rokiprag in the dose of 0,06 l/ha is applied through an overall ground spraying of vegetative plants of spring barley variety Moskovskiy 2 in the phase of the beginning of the leaf-tube formation and during the phase of the flag leave appearance. The equipment used - an Agrotop backpack pneumatic sprayer, equipped with a two-meter rod. The working fluid consumption: 300 l/ha.

The comparative evaluation of Rokiprag biological effectiveness demonstrated its high effectiveness vs Larixin. The accounting 30 days after spraying spring barley plantings in the flag leave phase proved a considerable advance in the growth as compared to the control. The analysis of the yield structure elements showed that the yielding capacity of spring barley was affected by the structure element the mass of 1000 grains. In all Rokiprag application options, the mass of 1000 grains increased by 20%, while Larixin exhibited the increase of the mass of 1000 grains by 14 % only as compared to the control.

Crop spraying in the phase of the beginning of the leaf-tube formation in the dose of 0,06 l/ha contributed to the increase in spring barley yielding capacity by 120,3 %, and in the flag leave appearance phase l/ha - by 121,2 % as compared to the yielding capacity of the untreated control group (the control yielding capacity is 30,6 c/ha). Therefore, biologically active synergistic composition Rokiprag exhibit a high economic effectiveness on grain crops plantings, considerably increasing their yield capacity, and expanding the temperature range of the application.

**Example 2**

4 litres of propylene glycol CAS 57-55-6, 1 litre of ethanol CAS 64-17-5 are loaded into a heated reactor with a mixer with a capacity of 0,5 kW, the working volume of 0,3 $m^3$, and are heated up to 37°C, after which 610 g taxifoline CAS 207-543-4, 51 g of dihydrokaempferol CAS 480-20-6 and 6 g of naringenin CAS 480-41-1 are added and mixed at the temperature of 33°C until fully dissolved. Then, 1270 ml of emulsifier Soya Lecithin Liquid CAS 8002-43-5 are dosed to the reactor and mixed for 40 minutes. 26 l of distilled water are poured into a similar reactor and heated to the temperature of 39°C, after which 50 g of arabinogalactan CAS 9036-66-2 and 70 g of water-soluble triterpenoids are added and mixed for 4 hours, after which 145 g of taxifoline CAS 207-543-4, 21 g of dihydrokaempferol CAS 480-20-6 and 10 g of naringenin CAS 480-41-1 are added. Mixing is carried out for 2 hours at the temperature of 30°C. The aqueous phase is dosed into the first reactor with the prepared oil phase at the rate of 0,3 l/min for 90 minutes with the mixing power of 0,5 kW and the circulation rate of 12 reactor volume units per hour at the temperature of 35°C. The prepared emulsion in the quantity of 30 litres is cooled while thoroughly mixing for 60 minutes at the temperature of 20°C, then taken out of the reactor and dispensed into 1 litre bottles. The finished emulsion of biologically active synergistic composition Rokiprag is a dark-brown transparent liquid with the density of 1,055 $g/cm^3$, the pH value of 1 % aqueous emulsion of the preparation is 5,7.

The active components' content: taxifoline - 25,2 g/l, dihydrokaempferol - 2,4 g/l, naringenin - 0,33 g/l, which correlates with the synergistic molar ratio of the components 1 : 0,104 : 0,016. The particle diameter (50 % of the composition) is not more than 2,4-3,2 $\mu$m. The preparation is stable in the original packing within 2 years from the date of manufacture in the temperature range of plus 30°C to minus 20°C. At the temperature below minus 20°C, it freezes throughout the entire volume. After thawing, formation of an about 1-3 mm high oil phase layer is observed at the bottom, disappearing when mixed.

The field microplot trial of aqueous emulsion biologically active synergistic composition Rokiprag was conducted within the period of September 2010 - July 2011. Crop - winter wheat, variety Moskovskaya 39, seed rate - 230 kg/ha. Seeding date - September 10, 2010. Soil - leached chernozem, the humus content in the plowing layer is 4,8 %, pH 5.8, with high potassium and phosphorous content. Preceding crop - green-manured mustard fallow. Soil preparation - mustard herbage disking in with a white disk harrow, preplanting cultivation, sowing, seed rolling. Seedling emergence time - September 20, 2010. Fertilizers - spring fertilization with $N_{60}$ using the broadcast method. Plant development phase at the time of treatment (May 27, 2011) - tillering period.

Meteorological extremes were observed throughout the trial period - lack of moisture and high temperatures in May - July. The air temperature on the day of treatment was 28°C, the relative air humidity was 64 %, the wind speed was 2 m/s. The method of application - the overall ground spraying of the vegetative plants in the tillering phase. The equipment used - an Agrotop backpack pneumatic sprayer, equipped with a two-meter rod. The working liquid consumption: 300 l/ha.

Accounting dates: June 26 - 30 days after spraying, July 11 - 45 days after spraying, July 18 - at harvesting. Methods of accounting: quantitative and quantitative - weight methods on 4 accounting sites of 0,25 $m^2$ on each trial plot. Method of harvesting and yield accounting: manual, with the trial sheaf method on the accounting area of 1 $m^2$ on each trial plot. Harvesting date - July 18, 2011.

To get the data about the possible toxicity of the emulsion of the biologically active synergistic composition for winter wheat plants, systematic visual observations of the treated plots were made. With exposure to Rokiprag doses of 0,03 and 0,06l/ha, no visible suppression of the vegetative plants of winter wheat of variety Moskovskaya 39 was reported. The plants did not differ in the leaves colour, height from the plants on the control and reference variants, except for the dose of 0,06 l/ha, when the faster growth of pants was reported.

The conducted field microplot trials demonstrated high effectiveness of the application of the tested preparation consumption rates. 30 days after the winter wheat plantings treatment in the leaf-tube formation phase with biologically active synergistic composition Rokiprag in the doses of 0,03 and 0,06 l/ha enhanced the plants growth by 6 and 8 %. At the accounting 45 days after spraying, the plant growth acceleration was 8 and 10 %, and their biomass growths - 7 and 9 %, respectively.

The analysis of the yield structure elements showed that the yielding capacity of winter wheat was affected by the structure element the mass of 1000 grains. On the options with the application with the use of all the preparation consumption rates, the mass of 1000 grains increased by 3,2-3,7 g as compared to the untreated option (the mass of 1000 grains on the control - 44,4 g).

The structure of the yield of winter wheat of the variety Moskovskaya 39 with Rokiprag application is presented in Table 9.

Table 9

| Trial option | Replication | Structure elements | | | | |
|---|---|---|---|---|---|---|
| | | Fertile stems, pcs/m$^2$ | Plant height, cm | Wheatear length, cm | Grains in wheatear, pcs | Mass of 1000 grains, g |
| Rokiprag - 0,03 l/ha | 1 | 386 | 92.6 | 10.5 | 35.5 | 48.3 |
| | 2 | 420 | 96.0 | 9.3 | 35.2 | 47.9 |
| | 3 | 391 | 90.5 | 9.1 | 31.7 | 48.7 |
| | 4 | 440 | 95.0 | 8.5 | 32.2 | 47.4 |
| | Average | **409** | **93.0** | **9.3** | **33.6** | **48.1** |
| Rokiprag - 0,06 l/ha | 1 | 448 | 93.9 | 9.1 | 34.5 | 46.6 |
| | 2 | 472 | 90.1 | 8.6 | 36.0 | 47.8 |
| | 3 | 412 | 88.5 | 9.0 | 35.6 | 48.4 |
| | 4 | 388 | 89.6 | 8.5 | 31.7 | 47.6 |
| | Average | **430** | **90.5** | **8.8** | **34.4** | **47.6** |
| Larixin - 0,05 l/ha (reference) | 1 | 440 | 83.3 | 8.4 | 34.2 | 47.5 |
| | 2 | 454 | 90.0 | 9.8 | 33.0 | 46.8 |
| | 3 | 402 | 93.0 | 10.0 | 31.0 | 46.2 |
| | 4 | 464 | 91.0 | 9.4 | 34.7 | 47.5 |
| | Average | **440** | **89.3** | **9.4** | **33.2** | **47.0** |
| Control | 1 | 430 | 89.0 | 8.5 | 32.0 | 43.6 |
| | 2 | 414 | 90.0 | 9.0 | 30.8 | 44.4 |
| | 3 | 390 | 91.0 | 8.6 | 31.7 | 44.8 |
| | 4 | 422 | 92.0 | 8.8 | 31.0 | 45.0 |
| | **Average** | **414** | **90.5** | **8.7** | **31.4** | **44.4** |

Spraying the crop plantings in the leaf-tube formation phase with Rokiprag in the doses of 0,03 and 0,06 1/ha contributed to increase in winter wheat yielding capacity by 16,2 and 19,5 % as compared to the yielding capacity on the untreated control plot (the control plot yielding capacity is 36.4 c/ha).

The yielding capacity of winter wheat variety Moskovskaya 39 with the use of Rokiprag is presented in Table 10.

Table 10

| Trial option | Yield by replications, c/ha | | | | Average yield | |
|---|---|---|---|---|---|---|
| | 1 | 2 | 3 | 4 | c/ha | % to control |
| Rokiprag - 0,03 l/ha | 42,0 | 41,8 | 43,0 | 42,4 | 42,3 | 116,0 |
| Rokiprag- 0,06 l/ha | 43,0 | 42,9 | 44,4 | 44,2 | 43,6 | 119,7 |
| Larixin - 0,05 l/ha | 41,6 | 41,5 | 42,7 | 41,7 | 41,9 | 114,9 |
| Control | 37,5 | 36,3 | 36,2 | 35,8 | 36,5 | 100,0 |

The conducted microplot registration tests of Rokiprag under the conditions of Ryazan Region on winter wheat demonstrated that spraying of plantings in the leaf-tube formation phase did not have an adverse effect on further growth and development of the crop. The application of Rokiprag in the doses under study considerably enhanced the grain crops resistance to oidium, Septoria spot, Helminthosporium disease. The biological effectiveness of Rokiprag against Septoria leaf blotch in the trials was 61 %, brown rust - 83,3 %. Biologically active synergistic composition Rokiprag in the dose of 0,03 1/ha demonstrated high effectiveness and resistance of plantings to weather abnormalities and increase in yield capacity.

**Example 3**

10,5 litres of propylene glycol CAS 57-55-6 are loaded into a heated reactor with a mixer with a capacity of 0,5 kW, the working volume of 0,3 $m^3$, and are heated up to 37°C, after which 1490 g taxifoline CAS 207-543-4, 130 g of dihydrokaempferol CAS 480-20-6 and 63 g of naringenin CAS 480-41-1 are dosed and mixed at the temperature of 39°C until fully dissolved. Then, 2400 ml of emulsifier Soya Lecithin Liquid CAS 8002-43-5 are dosed to the reactor and mixed for 40 minutes. 26 l of distilled water are poured into a similar reactor and heated to the temperature of 39°C, after which 90 g of arabinogalactan CAS 9036-66-2 and 25 g of water-soluble triterpenoids are added and mixed for 4 hours, followed by addition of 145 g of taxifoline CAS 207-543-4, 21 g of dihydrokaempferol CAS 480-20-6 and 10 g of naringenin CAS 480-41-1. Mixing is carried out for 2 hours at the temperature of 30°C. The aqueous phase is dosed into the first reactor, containing the prepared oil phase, at the rate of 0,3 l/min for 90 minutes at the mixing power of 0,5 kW and the circulation rate of 12 reactor volume units per hour at the temperature of 35°C. The prepared emulsion in the quantity of 30 litres is cooled while thoroughly stirring for 60 minutes at the temperature of 20°C, then taken out of the reactor and dispensed into 1 litre bottles. The active components' content: taxifoline - 50,2 g/l, dihydrokaempferol - 4,9 g/l, naringenin - 0,7 g/l, which correlates with the synergistic molar ratio of the components 1 : 0,103 : 0,015. The particle diameter (50 % of the composition) is 2,2 - 3,6 $\mu$m. The preparation is stable in the original packing within 2 years from the date of manufacture in the temperature range of plus 30°C to minus 20°C. At the temperature below minus 20°C, it freezes throughout the entire volume. After thawing, formation of an about 5 mm high oil phase layer is observed at the bottom, disappearing when mixed.

The field microplot tests of the emulsion of biologically active synergistic composition Rokiprag were carried out in 2013 on the farming lands of Rokishkis District of the Lithuanian Republic.

The studies were conducted in a plastic-covered above-ground greenhouse. The greenhouse had no heating and was equipped with a hose watering system. Soil - sod-humous. Prior to planting, the soil in the greenhouse was wetted down, adequately fertilized with azophoska, bringing the level of the mineral nutrition elements supply to $N_2$0-90, $P_2O_5$-20, $K_2$0- 25, $Mg_{70}$, $Ca_{90}$. The seedlings were nursed in a plastic-covered greenhouse with emergency heating. The seeds were sawn on April 15 into boxes filled with the mixed soil (1 portion of the field soil and 2 portions of saw dust). Prior to planting, the mixed soil was wetted down with blue copperas to protect the germinating seedlings from root rot and neck rot. On Day 8 after germination, the seedlings were pricked off to 10/10 cm pots, located in the plastic-covered greenhouse with emergency heating. The care of the transplanted seedlings included 2 dressings with a compound mineral fertilizer Kemira, watering, weeding, and arrangement. The seedlings were transplanted to the plastic-covered above-ground greenhouse on May 31. The holes were dug according to a two-row pattern 90x40 with the distance between the holds of 35-40 cm. The planting density was 3,5 plants per 1 $m^2$. One-stem plants were formed, tied to 2 m high espaliers with binding twine. The plants were handled in accordance with the generally accepted technology. The plants were treated in the vegetation period on June 10, June 20, and July 1. The tests by spraying were conducted on the vegetative crops of tomatoes under coverage. The area of the test plots was 10 $m^2$. The control plot area was 5 $m^2$. The trial had four replications. The experimental design was as follows:

1. The control plot - without treatment.
2. Rokiprag - the first spraying was made in the phase of the beginning of the first cluster blooming, the second spraying was made 10 days after the first one, the third spraying was made days after the second one. The preparation consumption rate was 60 ml/ha, the working solution consumption rate was 400 l/ha.
3. Larixin - the first spraying was made in the phase of the beginning of the first cluster blooming, the second spraying was made 10 days after the first one, the third spraying was made days after the second one. The preparation consumption rate was 60 ml/ha, the working solution consumption rate was 400 l/ha.

Acceleration of the transplanted seedlings' biomass growth by 25 - 30 %, the blooming phase onset 2 - 3 days earlier were reported during the trial, as well as acceleration of the fruit ripening by 4 - 6 days as compared to the control. At the same time, reduction of the plant affection by buck eye rot, Alternaria blight, Septoria blight, bacterial black spot by 65 - 70 % as compared to the control was reported.

The products quality was evaluated according to the standard procedures: solids content - by thermostatic-weight method, sugar content - by Bertrand's method, vitamin C content - by I.K. Murri's method. The variation statistics methods were used for data processing (B.A. Dospekhov, 1985).

As the accounting showed, treatment with the growth regulators positively affected the period of major phenophases. With treatment with Rokiprag, the difference with the control group in the fruit formation beginning and fruit ripening beginning phases was 4 days. The difference with Larixin reference did not exceed 1 day.

The effect of Rokiprag on the phenophase periods of tomato plants are illustrated in Table 11.

Table 11

| Trial option | Mass blooming | Beginning of fruit formation | Beginning of fruit ripening |
|---|---|---|---|
| 1. Control, no treatment | 18.VI | 28.VI | 22.VII |
| 2. Larixin reference, 60 ml/ha | 17. VI | 25.VI | 19. VII |
| 3. Rokiprag, 60 ml/ha | 17. VI | 24.VI | 18.VII |

The tomato plants treatment with Rokiprag positively affected acceleration of the fruit ripening and early product yield. Substantial differences in yielding capacity as compared to the control in the first weeks of harvesting were reported. The increase in the overall fruit yield influenced by treatment with Rokiprag was 7,1 % as compared to the control.

Rokiprag effect on the tomato yield is illustrated in Table 12.

Table 12

| Option | Yielding capacity, kg / $m^2$ | | Increase over control | |
|---|---|---|---|---|
| | In the first 2 weeks of harvesting | Overall | kg/$m^2$ | % |
| 1. Control | 0,8 | 2,8 | - | - |
| 2. Larixin reference, dose of 60 ml/ha | 1,1 | 3,1 | 0,3 | 10,7 |
| 3. Rokiprag, dose of 60 ml/ha | 1,2 | 3,0 | 0,2 | 7,1 |
| HCP 05 | 0,2 | 0,3 | - | - |

The study of the biochemical composition of tomatoes depending on the trial options showed that in response to the treatment, the content of solids, sugars and vitamin C in tomatoes increased as compared to the control.

The effect of Rokiprag on the biochemical composition of tomatoes is presented in Table 13.

Table 13

| Trial option | Solids, % | Sugars, % | | Vitamin C, mg % | $NO_3$, mg / kg |
|---|---|---|---|---|---|
| | | Mono- | Di- | | |
| 1. Control | 7,9 | 3,5 | 0,08 | 17,5 | 23 |
| 2. Larixin, reference, dose of 60 | 9,5 | 3,91 | 0,60 | 25,0 | 38 |
| 3. Rokiprag dose of 60 Ml/ha | 9,5 | 4,0 | 0,27 | 20,5 | 29 |

The nitrate nitrogen content in the products in all trial options was considerably lower than the MAC value, which is for the protected ground tomatoes equal to 300 mg/wet weight kg. High eating qualities of the products were reported.

Therefore, based on results of the conducted tests, a positive effect of Rokiprag on the early product yield, biochemical composition and eating qualities of tomatoes.

**Example 4**

Under the conditions of preparing the aqueous emulsion of biologically active synergistic composition Rokiprag, described in Example 3, the field microplot tests of Rokiprag on the vegetative crops of grape in the weather-climatic conditions of Rokiskis District, the Lithuanian Republic, in the season of 2013. Soil - leached chernozem. The humus horizon power exceeds 150 cm. The soils are reach in total potassium; the quantity of total phosphorus in the top horizons is 0,18 %, the main part is presented by mineral compounds, in the top layers - 55-65 %, in the bottom horizons - over 90 % of the overall quantity, the content of organic phosphates is 43 % in the top horizons, and 8-10 % in the bottom horizons. Black earth soils have a high moisture-retention capacity, but are characterized by a low range of active moisture. Of the overall quantity of the soil moisture, only less than 50 % can be referred to the category of the active or productive moisture. Climate - the trial establishment region - non-stable-humid area. The precipitation ratio is 0,25-0,30. 500-600 mm of precipitation fall annually. The monthly average temperature in January is minus 5-7°C, the minimum temperature is minus 30-36 °C, the snow cover depth is 5-7 cm. 50-70 % of the snow cover is unstable. Recovery of winter crops vegetation is recorded in the third decade of March. The frost-free season lasts for 185-220 days. Summer is hot, with clear and dry weather prevailing. The average monthly temperature of July is plus 24-26 °C, on some days the maximum weather rises up to plus 30-33 °C. Over the summer, there are up to 80-90 hot days (with the average temperature above plus 20 °C). The total precipitation in the active vegetation period is 250-300 mm. There are up to 70-85 days with dry hot winds over the summer. Quick temperature rise is a distinctive feature of the spring period in the area. Sizeable air temperature fluctuations during 24 hours within the range of plus 1-2 °C at night to plus 25-26°C in the daytime are characteristic for the autumn period. The weather conditions in the vegetation period of 2013 are presented in Table 14.

Table 14

| Month | Air temperature, °C | | Amount of precipitation, mm | | Relative air humidity, % | |
|---|---|---|---|---|---|---|
| | average many-year | in vegetation period | average many-year | in vegetation period | average many-year | in vegetation period |
| April | 10,9 | 14,0 | 48 | 6,8 | 69 | 58,8 |
| May | 16,8 | 22,0 | 57 | 5,7 | 67 | 53,3 |
| June | 20,4 | 13,5 | 67 | 28,5 | 66 | 58,7 |
| July | 23,2 | 24,9 | 58 | 31,8 | 64,3 | 56,0 |

The weather conditions in the agricultural plant vegetation period significantly differed from the average many-year values. An early dry spell and high temperature accelerated the vegetation phases and leaves ageing, weakened the process of the reproductive organs formation. Rain showers during the ripening phase and in the harvesting period reduced the quality of the agricultural products.

Experimental design:

1. Control - no treatment;
2. Larixin - plant spraying: 1st - in the blooming phase, 2nd - 20 days after the first one (250 ml/ha, 600 l/ha);
3. Rokiprag - plant spraying: 1st - in the blooming phase, 2nd - 20 days after the first one (250 ml/ha, 600 l/ha).

The accounting area of the plots is 10 $m^2$, four replications.

During the trial, the structural analysis of the yield was conducted (the number of the clusters and their mass was determined), the yielding capacity of berries per bush and per hectare (based on the actual gross yield); the quantity of the berries - the content of sugar and titrated acids in them (I.I. Ivanov, 1946). The yield data, the number and masses of the grape clusters were processed using the method of the analysis of variance according to B.A. Dospekhov (1985).

The effect of the preparations under test on cluster formation and quality of the grape berries is illustrated in Table 15.

Table 15

| Option | Number of clusters, pcs/bush | Cluster mass, g | Content in berry juice of | |
|---|---|---|---|---|
| | | | sugar, g/100 $cm^3$ | titrated acids, g/$dm^3$ |
| Control | 23,6 | 158,8 | 20,7 | 7,3 |
| Larixin (250 ml/ha) | 27,0 | 173,9 | 21,7 | 8,8 |
| Rokiprag (250 ml/ha) | 27,2 | 174,7 | 22,3 | 9,5 |
| HCP$_{05}$ | 0,9 | 5,8 | | |

As the studies showed, a double spraying of vegetative grape plants (the 1st - during blooming and the 2nd - 20 days after the first) contributed to formation of a greater number of clusters (27,0-27,2 pcs, in the control - 23,6 pcs), with greater mass (173,9-174,7 g, in the control-158,8 g). At the same time, the quality of the berries increased - the content of sugars (21,7-22,3, in the control - 20,7 %) and titrated acids (8,8-9,5 g/dm, in the control - 7,3 g/dm$^3$) in their juice increased. It should be mentioned that in the option with the usage of Rokiprag in the dose of 250 ml/ha, the cluster mass and the number of clusters was the maximum, and the quality of the berries was the best.

The effect of the preparations under test on the grape yielding capacity is illustrated in Table 16.

Table 16

| Option | Yielding capacity, kg/bush | Increase over control | | Yielding capacity, t/ha | Increase over control | |
|---|---|---|---|---|---|---|
| | | kg | % | | t/ha | % |
| Control | 3,71 | - | - | 8,30 | - | - |
| Larixin (250 ml/ha) | 4,43 | 0,72 | 19,4 | 9,9 | 1.68 | 20,2 |
| Rokiprag (250 ml/ha) | 4,45 | 0,74 | 19.9 | 10,05 | 1,75 | 21.1 |
| HCP$_{05}$ | 0,2 | | | 0,4 | | |

The data of Table 3 show that due to the increase of the number of clusters by 12,3-15,7 % and the cluster mass by 4,7-10,0 %, the grape yielding capacity per bush increased by 19,4 - 19,9 %, per hectare - by 20,2 - 21,1 %. The maximum yielding capacity was reached in the option with a double treatment of plants with Rokiprag in the dose of 250 ml/ha.

**References**

1. RU patent No. 2463759, A01C 1/06, A01C 1/08,2011.
2. All-Russian Research Institute of Medicinal and Aromatic Plants (VILFR). Kolhir Vladimir Karlovich. Search and development of phytopreparations, containing triterpenoids and flavonoids. Thesis for the degree of the doctor of medical science in the form of report. Kupavna 2002 http://medical-diss.com/docreader/55384/a?#?page=1
3. International application WO 2005/058476, B01J 13/16, 2005.
4. International application WO 2008/123797, A61K 9/10, A61K 9/107, A61K 31/352, A61K 31/015, A61K 36/324, A61K 33/00, A61K 8/06, A61K 9/10, A61K 47/10, A61K 47/14. 2008.
5. RU patent No. 2229213, A01G1/00, A01N65/00, 2002.
6. State catalogue of pesticides and agrochemicals of the RF. Registration numbers 0164-06-111-042-0-1-3-0 and 1986-10-111-042-0-1-3-1.
7. Council Regulation (EC) No 834/2007 of 28 June 2007 on organic production and labelling of organic products and repealing Regulation (EEC) No 2092/91. Official Journal of the European Union, L 189/1, 20.7.2007.
8. Commission Regulation (EC) No 889/2008 of 5 September 2008 laying down detailed rules for the implementation of Council Regulation (EC) No 834/2007 on organic production and labelling of organic products with regard to organic production, labelling and control. Official Journal of the European Union, L 250/1, 18.9.2008.

**Claims**

1. A biologically active synergetic composition **characterized in that** its aqueous emulsion comprises a bioflavonoid complex of dihydroquercetin, aromadendrin and naringenin, having molar ratio of 1,0 : 0,102 - 0,104 : 0,014 - 0,016, a solvent and an emulsifier, and aqueous phase of emulsion additionally comprises arabinogalactan and water-soluble triterpenoids in the weight ratio of 1-3 : 5-7 in the quantity of 0,3 - 0,7 Wt % of the aqueous phase, and the bioflavonoid complex is divided between the oil phase and the aqueous phase in the weight ratio of 5-10 : 1

2. The biologically active synergetic composition according to claim 1, **characterized in that** the oil phase comprises a solution of the bioflavonoid complex in propylene glycol and/or ethanol, and polyaromatic ethoxylate and sodium dioctyl sulphosuccinate in the weight ratio of 8-10 : 5-7, or 60 % lecithin solution in soy oil, taken in the quantity of 15 - 25 % of the oil phase volume, are used as emulsifiers.

3. A method of preparation of the aqueous emulsion of the biologically active synergetic composition, comprising the following steps:

(i) separate preparation of the oil and liquid phases, comprising the following steps:

a) preparation of the aqueous phase in distilled water by dissolving arabinogalactan and triterpenoids in the quantity of not more than 5 grams per 1 litre during 4 hours at a temperature of 30 - 40°C,
b) adding biologically active components in synergetic ratio in amount not exceeding 0,5 grams per 1 litre of water to the solution obtained in step (a),
c) preparation of the oil phase by dissolving dihydroquercetin, aromadendrin and naringenin taken in the molar ratio of 1,0 : 0,102 - 0,104 : 0,014 - 0,016, in propylene glycol preheated to the temperature of 33 - 39°C,
d) adding of Agrilan AEK 145 which is a non-ionic emulsifier based on polyaromatic ethoxylate or SOPROPHOR BSU which is poly(oxy-1,2-ethanediyl), .alpha.-[tris(1-phenylethyl)phenyl]-omega.- hydroxyl in the quantity of 15 - 25 % of the volume of the solution of active components to the solution obtained in step (c) and dissolving for 30 - 45 minutes,
(f) adding of stabilizer consisting of Lankropol KPH 70 which is sodium dioctyl sulphosuccinate and propylene glycol or GEROPON DOS/PG which is sodium dioctyl sulphosuccinate in glycol water solution in the quantity of 6 - 9 vol % into solution obtained in step (d),
g) keeping the solution obtained on step (f) at the temperature of 30 - 33°C for 45 - 60 minutes while thoroughly mixing,

(ii) continuous dosing of the prepared aqueous phase to the oil phase for 60 - 90 minutes, when the reaction mass circulation rate is 9 - 12 volumes per hour and the mixing power is 0,016 - 0,024 kWh per 1 litre of the emulsion,
(iii) cooling down the emulsion obtained in step (ii) to the temperature of 20 - 25°C in 60 - 90 minutes.

4. The use of composition according to claim 1-3 for treatment of agricultural plants seeds or crops in early vegetative stages by spraying, where the composition is further dissolved in water to obtain bioflavonoid complex concentration of 0,05 - 0,25 g/l.

**Patentansprüche**

1. Eine biologisch aktive synergetische Komposition, die sich darin **unterscheidet**, dass ihre Wasser-Emulsion einen Bioflavonoid-Komplex aus Dihydroquercetin, Aromadendrin und Naringenin enthält, deren Molverhältnis 1,0 : 0,102 - 0,104 : 0,014 - 0,016 beträgt, ebenso ein Lösungsmittel und einen Emulgator, und die Wasserphase der Emulsion umfasst zusätzlich Arabinogalactan und wasserlösliche Triterpenoide, deren Gewichtsverhältnis 1 - 3 : 5 - 7 beträgt, nach der Menge 0,3-0,7 % Gewicht der Wasserphase, und der Bioflavonoid-Komplex verteilt sich zwischen der Öl- und Wasserphase im Gewichtsverhältnis 5-10:1.

2. Eine biologisch aktive synergetische Komposition gemäß Ziffer 1, die sich darin **untersch eidet**, dass ihre Ölphase die Lösung eines Bioflavonoid-Komplexes in Propylenglycol und/oder Ethanol umfasst, und als Emulgatoren werden polyaromatische Ethoxylate und Natrium-Dioctyl-Sulfosuccinat eingesetzt, deren Gewichtsverhältnis 8 - 10 : 5 - 7 oder eine 60 %-Konzentration von Lecithin in Sojaöl beträgt, deren Menge ein Volumen von 15-25 % der Ölphase ausmacht.

3. Das Herstellungsverfahren der Wasser-Emulsion der biologisch aktiven synergetischen Komposition beinhaltet die nachstehenden Schritte:

(i) Vorbereitung einer separaten Wasser- und Ölphase, die die nachfolgenden Schritte umfasst:

(a) Vorbereitung der Wasserphase in destilliertem Wasser durch Auflösen von Arabinogalactan und Triterpenoiden, nicht mehr als 5 Gramm auf 1 Liter Wasser, und Ruhen der Lösung für 4 Stunden bei einer Temperatur von 30-40 °C,
(b) Hinzufügen der biologisch aktiven Komponenten, deren Menge im synergetischen Verhältnis 0,5 Gramm auf 1 Liter Wasser nicht überschreiten darf, zu der in Schritt (a) hergestellten Lösung,

(c) Vorbereitung der Ölphase durch das Auflösen von Dihydroquercetin, Aromadendrin und Naringenin, deren Molverhältnis 1,0 : 0,102 - 0,104 : 0,014 - 0,016 beträgt, in auf 33-39 °C vorgeheiztem Propylenglycol,

(d) Hinzufügen des Emulgators Agrilan AEK 145, bei dem es sich um einen anionischen Emulgator auf der Basis von polyaromatischem Ethoxylat handelt, oder von SOPROPHOR BSU, bei dem es sich um Poly(oxy-1,2-Ethanediyl), .Alpha.-[tri(1-phenylethyl)phenyl]-omega.- Hydroxyl handelt, dessen Anteil 15-25 % der aktiven Komponenten in der Lösung ausmachen muss, zu der in Schritt (c) hergestellten Lösung und seine Auflösung, die 30-45 min. dauert,

(f) Hinzufügen des Stabilisators Lankropol KPH 70, bei dem es sich um Dioctyl-Natrium-Sulfosuccinat oder Propylenglycol handelt, oder von GEROPON DOS/PG, bei dem es sich um Dioctyl-Natrium-Sulfosuccinat in wässriger Glycol-Lösung handelt, Anteil 6-9 %, zu der in Schritt (d) hergestellten Lösung,

(g) Aufbewahren der in Schritt (f) hergestellten Lösung für 45-60 min., bei einer Temperatur von 30-33 °C, unter intensivem Rühren,

(ii) kontinuierliche Dosierung der zuvor hergestellten Wasserphase, die 60-90 min. dauert, in die Ölphase, bei einer Teilbarkeit der Reaktionsmassenzirkulation von 9-12 Volumen pro Stunde, wo die Mischintensität 0,016-0,024 kW auf 1 Liter der Emulsion beträgt,

(iii) Abkühlen der in Schritt (ii) hergestellten Emulsion innerhalb von 60-90 min. auf eine Temperatur von 20-25 °C.

4. Einsatz der biologisch aktiven synergetischen Komposition gemäß Ziffer 1-3 zur Behandlung von Pflanzensamen in der Landwirtschaft oder zum Besprühen von Kulturpflanzen in frühen Vegetationsstadien, wo die erwähnte Komposition weiter in Wasser gelöst wird, bis eine Konzentration des Bioflavonoid-Komplexes von 0,05-0,25 g/l erreicht ist.

## Revendications

1. Une composition synergique biologiquement active qui est différente parce que sa émulsion d'eau contient le complexe de dihydroquercetin bioflavonoïde, d'aromadendrine et de naringenine, dont le rapport molaire est 1,0 : 0,102 - 0,104 : 0,014 - 0,016, le solvant et l'émulsifiant et la phase aqueuse de l'émulation inclue en addition l'arabinogalactane et les triterpénoïdes solubles dans l'eau, dont le rapport de poids est 1 - 3 : 5 - 7, par rapport à la quantité 0,3-0,7 % de la phase aqueuse des poids et le complexe bioflavonoïde est distribué entre les poids de la phase huileuse et la phase aqueuse dans la proportion en poids de 5-10:1.

2. Une composition synergique biologiquement active suivant le point 1 qui est différente parce que la phase huileuse inclue la solution dans le propylèneglycol et/ou éthanol de complexe bioflavonoïde et en tant que les émulsifiants les éthoxylates et dioctyl-sulfosuccinate de sodium sont utilisés, dont le rapport de poids est 8 - 10 : 5 - 7 ou la solution de lécithine dans l'huile de soja de la concentration de 60 %, dont la quantité contient 15-25 % de volume de la phase huileuse.

3. Méthode d'obtention de l'émulsion aqueuse de la composition synergique biologiquement active qui inclue les étapes suivantes :

(i) la préparation séparée de la phase aqueuse et la phase huileuse qui inclue les étapes suivantes :

(a) la préparation de la phase acqueuse en dissolvant dans l'eau distillée arabinogalactane et triterpénoïdes dans la quantité non plus grande que 5 grammes dans 1 litre de l'eau et en tenant pour 4 heures dans la température de 30-40°C ;

(b) placement des components biologiquement actifs dont la quantité dans le ratio synergique ne doit pas excéder 0.5 gramme pour 1 litre de l'eau dans la solution obtenue dans l'étape (a) ;

(c) la préparation de la phase huileuse en dissolvant le dihydroquercetin, l'aromadédrine et le naringenine, dont le rapport molaire est 1,0 : 0,102 - 0,104 : 0,014 - 0,016 dans le propylèneglycol préchauffé jusqu'à 33-39 °C

(d) l'ajout de l'émulateur Agrilan AEK 145 qui est un émulateur non ionique sur la base de l'éthoxylate policyclyque ou SOPROPHOR BSU qui est poli(oksi-1,2-ethanediil), .alfa.-[tris(1-feniletil)fenil]-omega.- hydroxyle, dont la quantité doit composer 15-25 % de la quantité de la solution des components actifs dans la solution obtenu dans l'étape (c) et la dissolution, dont la durée est 30-45 min. ;

(f) l'ajout du stabilisateur Lankropol KPH 70 qui est le sulfosuccinate de dioctyle et de sodium ou le propylèneglycol ou GEROPON DOS/PG qui est le sulfosuccinate de dioctyle et de sodium dans la solution aqueuse de glycol, quantité 6-9 %, dans la solution obtenue dans l'étape (d) ;

(g) le stockage de la solution préparée dans l'étape (f) pour 45-60 min. dans la température de 30-33 °C en l'intensément mélangeant

(ii) le dosage continu de la phase aqueuse préparée en avance qui dure 60-90 min. dans la phase huileuse en cas de la divisibilité de circulation de masse de réaction de 9-12 de volume par heure où l'intensité de mélange est 0,016-0,024 kW pour 1 litre de l'émulsion ;

(iii) le refroidissement de l'émulsion obtenue dans l'étape (ii) pendant 60-90 min. jusqu'à la température de 20-25 °C.

4. L'utilisation de la composition synergique biologiquement active suivant les points 1-3 pour le traitement des graines de plantes de l'agriculture ou des cultures agricoles dans les étapes de végétation primaires, la pulvérisation où la composition susmentionnée est ensuite dissolue dans l'eau jusqu'à la concentration du complexe bioflavonoïde est 0,05-0,25 g/l.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013172693 A
- RU 2464970
- RU 2463759
- WO 2005058476 A
- WO 2008123797 A
- RU 2229213

### Non-patent literature cited in the description

- **COLBY S.R.** Calculating Synergistic and Antagonistic responses of herbicide combination. *Weeds,* 1967, vol. 15 (1), 20-22
- *CHEMICAL ABSTRACTS,* 207-543-4
- *CHEMICAL ABSTRACTS,* 480-20-6
- *CHEMICAL ABSTRACTS,* 480-41-1
- *CHEMICAL ABSTRACTS,* 99734-09-5
- *CHEMICAL ABSTRACTS,* 577-11-7
- *CHEMICAL ABSTRACTS,* 57-55-6
- *CHEMICAL ABSTRACTS,* 57- 5-6
- *CHEMICAL ABSTRACTS,* 7732-18-5
- *CHEMICAL ABSTRACTS,* 8002-43-5
- *CHEMICAL ABSTRACTS,* 9036-66-2
- *CHEMICAL ABSTRACTS,* 64-17-5
- Search and development of phytopreparations, containing triterpenoids and flavonoids. **KOLHIR VLADIMIR KARLOVICH.** Thesis for the degree of the doctor of medical science in the form of report. All-Russian Research Institute of Medicinal and Aromatic Plants (VILFR), 2002